(19) Europäisches Patentamt
European Patent Office
Office européen des brevets

(11) Publication number: **0 508 513 A1**

(12) **EUROPEAN PATENT APPLICATION**

(21) Application number: **92200749.7**

(51) Int. Cl.[5]: **B01D 53/36**, B01J 29/08

(22) Date of filing: **17.03.92**

(30) Priority: **08.04.91 US 681251**

(43) Date of publication of application:
**14.10.92 Bulletin 92/42**

(84) Designated Contracting States:
**DE FR GB**

(71) Applicant: **GENERAL MOTORS CORPORATION**
**General Motors Building 3044 West Grand Boulevard**
**Detroit Michigan 48202(US)**

(72) Inventor: **Tsang, Chih-Hao Mark**
**2181 Hardwood Drive**
**Davison MI 48423(US)**

(74) Representative: **Haines, Arthur Donald et al**
**Patent Section 1st Floor Gideon House 28 Chapel Street**
**Luton, Bedfordshire LU1 2SE(GB)**

(54) **Catalyst for treatment of diesel exhaust particulates.**

(57) In a preferred method for treating diesel-fuelled engine exhaust to reduce emission of particulates having cores of carbonaceous material and condensable hydrocarbons deposited on the carbonaceous material, the condensable hydrocarbons in the exhaust are contacted with a catalytically-active solid acid material having hydrogen ions releasably retained at acidic sites thereof, and the condensable hydrocarbons in contact with the sites are cracked as hydrogen ions are released from the sites.

The solid acid material is desirably a Y-type zeolite with hydrogen (H) cations (HY zeolite), or hydrolyzed multi-valent cations, such as lanthanum (LaY zeolite), cerium (CeY zeolite) and calcium (CaY zeolite), and is supported on a ceramic or metal monolith. The HY zeolite is preferred. The Y-type zeolite is conveniently mixed with washcoat precursor particles and applied as a layer on said monolith.

EP 0 508 513 A1

This invention relates to a method of treating internal combustion engine exhaust. More particularly, it relates to the catalytic cracking of the unburned hydrocarbons in the exhaust as specified in the preamble of claim 1, for example as disclosed in US-A-3,476,508.

In diesel-fuelled engines, it is necessary to treat particles typically of the order of 0.1 micrometre in diameter. Each of the particles contains a solid, carbonaceous core with a soluble organic coating in the form of a shell of condensable hydrocarbons. The hydrocarbons condense on the core as the exhaust leaves the engine and the temperature of the exhaust drops.

The condensable hydrocarbons typically consist of relatively high-molecular weight (heavy) hydrocarbon molecules in the range of $C_5$ to $C_{45}$, with correspondingly high boiling points, which hydrcarbons are condensable at about room temperature. Depending on the fuel and engine conditions, the condensable hydrocarbons comprise 20 percent to 80 percent of the mass of the particulate material in the exhaust.

Diesel particulate material can be collected and removed from an exhaust gas stream by various types of on-board filters or traps. These devices soon become clogged and must be cleaned or replaced. In order to remove collected particulate material, the traps are heated by special heaters to temperatures greater than the exhaust temperature. This approach to treating particulate material is technically difficult and costly, and introduces a variety of other problems. Accordingly, there is a need for an improved, relatively inexpensive method for treating diesel exhaust particulate material to reduce the amount of particulate material present in the exhaust.

A method according to claim 1 is characterised by the features specified in the characterising portion of claim 1.

In accordance with the invention, diesel-fuelled engine exhaust is treated to reduce the mass and size of the particles in the exhaust. This is done by passing the exhaust into catalytic contact with a suitable solid acid material having hydrogen cations releasably retained at acidic sites thereon. Such acidic material promotes the catalytic cracking of the condensable hydrocarbons present in the hot exhaust gas. The elimination of some of the condensed hydrocarbons significantly reduces the size and total mass of the diesel exhaust particulate material.

Advantageously, the method may be utilized at the prevailing temperature of diesel exhaust, typically about 150°C to about 750°C.

Desirably, the solid acid material is selected from the group of amorphous aluminosilicates (clay), crystalline aluminosilicates (zeolites) and mixed oxides containing silica. Preferably, the solid acid material is a Y-type zeolite with hydrogen cations releasably retained at exchangeable cationic sites. Y-type zeolites have a relatively high ratio of silica to alumina and display good thermal stability. The cationic sites are occupied either exclusively by hydrogen (H) cations or by multi-valent cations that have been hydrolyzed so that $H^+$ is present. The Y zeolite having a hydrogen (H) cation is referred to as an HY zeolite. Multi-valent cations that can be so hydrolyzed are preferably selected from the group of lanthanum ($La^{+3}$), cerium ($Ce^{+3}$) and calcium ($Ca^{+2}$), and form LaY zeolites, CeY zeolites and CaY zeolites. The hydrolyzed form of these latter zeolites contains sufficient H cations to be suitably acidic.

Solid acid catalytic materials are known for their predominantly acidic property on their catalyst surfaces. Some solid acids are known to be relatively more basic, and exhibit some basic properties. Thus, a material is classified by its main, predominant surface property. As a result, solid acid materials constitute materials which are solid and on which the colour of a basic indicator changes or is chemically absorbed. In accordance with traditional Bronsted and Lewis definitions, a solid acid tends to donate protons or accept electrons. Amongst the solid acid materials are natural clays (amorphous aluminosilicates), zeolites (crystalline aluminosilicates) and mixed oxides. In aluminosilicates, the main constituents are silica and alumina. Mixed oxides are formed by mechanical or chemical mixing. In chemical mixing, binary oxides are formed by co-precipitation and calcining at a suitably high temperature.

In a preferred method of the invention, mixed oxides containing silica are used such as silica in combination with one or more of alumina, magnesia, titania, lanthana, zirconia and ceria.

It has been found that best results are achieved with preferred Y-type zeolites (crystalline aluminosilicates) prepared by a method where sodium cations ($Na^+$) at cationic sites are replaced with hydrogen ($H^+$). Such zeolites are often referred to as HY zeolites.

In order to both crack and combust (oxidize) at least a portion of the condensable hydrocarbons, in a preferred method the catalyst consists essentially of the HY type zeolite and a catalytic metal selected from the group of platinum, palladium, ruthenium, rhodium and iridium. At least a portion of the condensable hydrocarbons in the exhaust in contact with the sites is cracked as the hydrogen cations are released from the sites, and the cracked hydrocarbons are oxidized in the presence of the catalytic metal.

The method of the invention may be practiced using flow-through monoliths, beads or traps. The solid acid material with or without catalytic metal may be applied to and supported on a monolithic support body

formed of ceramic material or metal. Slurry containing solid acids can be used alone or blended with finely-divided particles of a washcoat precursor such as $SiO_2$, $Al_2O_3$, $CeO_2$, $La_2O_3$, ZrO2, NiO, $V_2O_5$, $K_2O$, and the like, and coated onto either ceramic or metallic monolithic support bodies. It may also be used directly in making the walls of ceramic monoliths. The metal or metal oxide catalysts, if desired, can be mixed into the slurry or can be loaded afterwards by an impregnation procedure.

Objects, features and advantages of this invention are to provide an improved method and catalysts for treating diesel engine exhaust particulate material which reduce the amount of particulate material present by cracking, which minimize sulphur oxidation, which method does not depend on the use of relatively large amounts of a precious metal catalyst and which is economical, efficient, continuous, effective and able to be used at the prevailing temperature of diesel exhaust.

These and other objects, features and advantages of the invention will be appreciated in view of the detailed description which follows.

The applicants have found that solid acid materials having releasable hydrogen cations at acid sites are surprisingly effective as catalysts for diesel fuel exhaust particulate emission control. Desirably, the solid acid material is selected from the group of amorphous aluminosilicates (clay), crystalline aluminosilicates (zeolites) and mixed oxides containing silica. Preferably, the solid acid material is a Y-type zeolite having hydrogen cations releasably retained at exchangeable cationic sites. The Y zeolite has H cations or hydrolyzed multi-valent cations. The Y zeolite having an H cation is referred to as an HY zeolite. Hydrolyzed multi-valent cations are preferably selected from the group of lanthanum ($La^{+3}$), cerium ($Ce^{+3}$) and calcium ($Ca^{+2}$), and form LaY zeolites, CeY zeolites and CaY zeolites.

Solid acid materials constitute materials which are solid and on which the colour of a basic indicator changes or is chemically absorbed. In accordance with traditional Bronsted and Lewis definitions, a solid acid tends to donate protons or accept electrons. Amongst the solid acid materials are natural clays (amorphous aluminosilicates), zeolites (crystalline aluminosilicates) and mixed oxides. In aluminosilicates, the main constituents are silica and alumina. Mixed oxides include: $SiO_2$-$Al_2O_3$, $SiO_2$-$TiO_2$, $SiO_2$-$SnO_2$, $SiO_2$-$ZrO_2$, $SiO_2$-BeO, $SiO_2$-MgO, $SiO_2$-CaO, $SiO_2$-SrO, $SiO_2$-ZnO, $SiO_2$-$Ga_2O_3$, $SiO_2$-$Y_2O_3$, $SiO_2$-$La_2O_3$, $SiO_2$-$MoO_3$, $SiO_2$-$WO_3$, $SiO_2$-$V_2O_5$, $SiO_2$-$ThO_2$, $Al_2O_3$-MgO, $Al_2O_3$-ZnO, $Al_2O_3$-CdO, $Al_2O_3$-$B_2O_3$, $Al_2O_3$-$ThO_2$, $Al_2O_3$-$TiO_2$, $Al_2O_3$-$ZrO_2$, $Al_2O_3$-$V_2O_5$, $Al_2O_3$-$MoO_3$, $Al_2O_3$-$WO_3$, $Al_2O_3$-$Cr_2O_3$, $Al_2O_3$-$Mn_2O_3$, $Al_2O_3$-$Fe_2O_3$, $Al_2O_3$-$Co_3O_4$, $Al_2O_3$-NiO, $TiO_2$-CuO, $TiO_2$-MgO, $TiO_2$-ZnO, $TiO_2$-CdO, $TiO_2$-$ZrO_2$, $TiO_2$-$SnO_2$, $TiO_2$-$Bi_2O_3$, $TiO_2$-$Sb_2O_5$, $TiO_2$-$V_2O_5$, $TiO_2$-$Cr_2O_3$, $TiO_2$-$MoO_3$, $TiO_2$-$WO_3$, $TiO_2$-$Mn_2O_3$, $TiO_2$-$Fe_2O_3$, $TiO_2$-$Co_3O_4$, $TiO_2$-NiO, $ZrO_2$-CdO, ZnO-MgO, ZnO-$Fe_2O_3$, $MoO_3$-CoO-$Al_2O_3$, $MoO_3$-NiO-$Al_2O_3$, $TiO_2$-$SiO_2$-MgO and $MoO_3$-$Al_2O_3$-MgO. Mixed oxides are formed by mechanical or chemical mixing. In chemical mixing, binary oxides are formed by co-precipitation and calcining at a suitably high temperature.

In a preferred method of the invention, mixed oxides containing silica are used such as silica in combination with one or more oxides selected from alumina, magnesia, titania, lanthana, zirconia and ceria.

It has been found that best results are achieved with preferred Y-type zeolites prepared by a method where the sodium cation ($Na^+$) at cationic sites is replaced with hydrogen ($H^+$). Such zeolites are often referred to as HY zeolites. The hydrogen is releasably retained at the cationic (acid) sites. In a typical method of formation of acidic sites on zeolites, the alkali metal cation, $Na^+$, of the zeolites is replaced when ammonia $NH_4$ is decomposed to $NH_3$ whilst a hydrogen proton is released to replace the $Na^+$.

The method of treating diesel-fuelled engine exhaust particulate with an HY-type zeolite basically comprises contacting the hot exhaust with its condensable hydrocarbon content with an HY-type zeolite having hydrogen cations at exchangeable cationic sites, the hydrogen cations being releasably retained at the sites, and cracking at least a portion of the condensable hydrocarbons in contact with the sites as the hydrogen cations are released from the sites.

The invention provides a method for catalyzing the cracking of such heavy (condensable) hydrocarbons into smaller, low boiling-point, gaseous molecules to reduce the amount of heavy hydrocarbon condensable material on and absorbed in the particles. Thus, the method provides a reduction in the amount of condensable heavy hydrocarbons and produces lighter gaseous hydrocarbons that can be more readily oxidized. Although the method is surprisingly effective for cracking condensable hydrocarbons (liquid at room temperature), cracking of gaseous hydrocarbons (gaseous at room temperature), also present in the exhaust stream, may also occur.

The effectiveness of the method was monitored in a test in which the gasification efficiency was quantified. The efficiency was determined without prior aging of the catalyst on a diesel engine dynamometer. That is, the efficiency tests were performed with catalysts in a condition as received from the vendor, except that precious metal-loaded catalysts ($Pd/SiO_2$ and $Pd/Al_2O_3$) were calcined. Gasification efficiency was determined based on the weight of condensable hydrocarbons in a trap at the outlet of a reactor during runs with catalyst present (W) and without catalyst present (WO). (The formula used was: Efficiency = WO

- W/WO).

A sample of 35 mg commercial hydrogen form Y-type zeolite (HY zeolite), which was precious-metal-free, was compared with 3.5 mg Pd/$SiO_2$ (palladium and silica) catalysts (3.3 weight percent Pd loading) to determine the gasification efficiency of each of them for n-dodecane (a heavy hydrocarbon: $nC_{12}$). The n-dodecane is representative of the condensable hydrocarbons, or the soluble organic fraction, of diesel fuel exhaust particulate emissions. In the test, a stream of air, approximately 88 ml/min, was bubbled through a reservoir of n-dodecane at about 57° C. The liquid hydrocarbon molecules entrained by the air were allowed to flow through the catalyst bed at 250° C and then cracked and/or oxidized.

The fraction of the product stream which contained hydrocarbons having boiling points higher than room temperature was collected in a trap and quantified gravimetrically. The n-dodecane gasification efficiency of each catalyst was obtained by comparing the amount of hydrocarbons condensed in the trap during the one-hour runs with the catalyst and with a blank reactor.

TABLE I

| Catalyst Composition | Weight (mg) | Gasification efficiency %** |
|---|---|---|
| Zeolite (HY) | 35 | 26 |
| Pd/$SiO_2$ | 3.5* | 28 |
| Pd/$Al_2O_3$ | 3.5* | 30 |
| $Al_2O_3$ | 35 | 5 |
| $SiO_2$ | 35 | less than 5 |

* 3.3 weight percent Pd loading; calcined.

** Results were obtained without aging of the catalyst.

The results of the gasification efficiency test are shown in Table I. The gasification efficiency of zeolite (HY) was 26 percent and about comparable to the efficiency of silica loaded with palladium (Pd) and alumina loaded with Pd. Silica and alumina individually showed efficiencies of 5 percent or less.

The results, as shown in Table I, indicate that, under the conditions used, the catalytically-active acid sites on the HY zeolite reduced the amount of liquid or condensable hydrocarbons as efficiently as the silica-supported or alumina-supported catalysts heavily loaded with Pd. Even though 10 times as much HY zeolite was used, the cost of this catalyst was much lower because of the absence of precious metals. The HY zeolite used in the test was obtained from PQ Corporation of Valley Forge, Pennsylvania, U.S.A.

A trace amount of precious metals incorporated in zeolites can enhance the activity and prolong the serviceable life of the acid sites. If desired, a very low percentage of precious metals (0.1 to 0.3 weight percent) may be loaded into the zeolite in order to reduce the mass of zeolite catalysts needed.

The presence of too great an amount of metal catalyst, as the oxidation catalyst, may worsen the particulate emission by forming sulphric acid via the catalytic oxidation of $SO_2$ to $SO_3$. Therefore, a solid acid catalyst without the metals may be used as a low-sulphate-producing catalyst for high sulphur content diesel fuel. This will reduce the condensable hydrocarbons (soluble organic fraction) of the particulate material present in the exhaust without the formation of sulphuric acid. However, a higher gaseous hydrocarbon emission could result if there is insufficient combustion of the cracked products. In order to enhance combustion (oxidation) of cracked hydrocarbons while maintaining a relatively low level of sulphur oxidation, a preferred method further includes oxidizing the cracked products in the presence of a relatively small amount of metal catalyst. This approach, as mentioned above, can enhance the activity and prolong the serviceable life of the acid sites.

Thus, the method provides for combustion (oxidation) of the lighter, gaseous hydrocarbons by a relatively small amount of metal or metal oxide catalysts selected from platinum group metals, Cu, Cr, Mn, Ag, Sn, Mo, W, and other catalytic metals.

The method of the invention may be practiced using flow-through monoliths, beads or traps. The solid acid material with or without catalytic metal may be applied to and supported on a monolithic support body of ceramic or metal. Slurry containing solid acids can be used alone or blended with finely-divided particles of a washcoat precursor such as $SiO_2$, $Al_2O_3$, $CeO_2$, $La_2O_3$, $ZrO_2$, NiO, $V_2O_5$, $K_2O$, and the like, and coated onto either ceramic or metallic monoliths. It may also be used directly in making the walls of ceramic monoliths because the much more moderate conditions of the diesel exhaust may allow the usage of monoliths with lower thermal shock resistance. The solid acid-containing slurry may also be used to make beads or traps of various kinds such as wall-flow monoliths, foam and filters, and to washcoat ceramic or

metallic particulate filters. The metal or metal oxide catalysts, if desired, can be mixed into the slurry or can be loaded afterwards by an impregnation procedure.

Whilst not wishing to be confined to any particular theory, it is thought that a significant temperature drop occurs between the exhaust gases leaving a cylinder of an operating diesel engine and the point at which those exhaust gases reach the catalyst (monolith), so that a significant amount of hydrocarbon condenses on the carbonaceous material present in the exhaust. Condensation of condensable hydrocarbons continues as the exhaust cools further between the catalyst (monolith) and a tail pipe of the vehicle. Therefore, entering the monolith, some portion of the condensable hydrocarbons of the exhaust stream is layered on the carbonaceous material, some portion exists as entrained droplets and still another portion is in a gaseous state. Advantageously, the invention provides a method to crack all such condensable hydrocarbons. Thus, as the temperature drops in the tail pipe, after cracking, there is less of the condensable hydrocarbons available to condense on the carbonaceous material. Accordingly, a lesser amount of particulate material is formed utilizing the method of the invention. It is thought that the cracking mechanism of the method follows surface carbonium ion chemistry, particularly the carbenium ion type, involving an initial step of hydrogen ion abstraction,

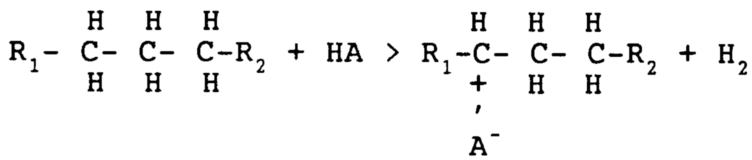

then the carbenium ion undergoes the so-called $\beta$ cleavage,

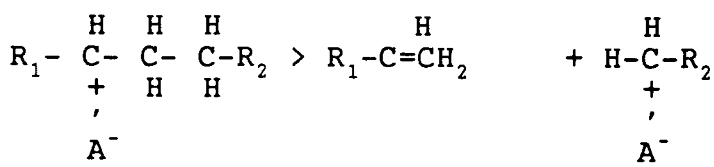

forming a smaller hydrocarbon and a smaller carbenium ion. The resulting carbenium ion can then attack other hydrocarbons by hydride ion transfer,

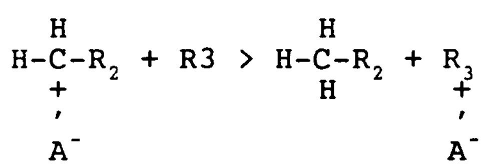

or desorb from the surface,

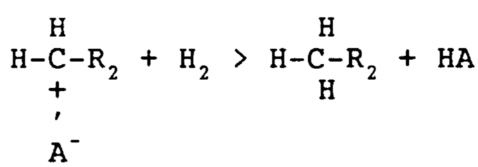

leaving the acid site available again to form carbenium ions with other heavier hydrocarbon molecules.

Solid acid catalysts that are mixed oxides exhibit characteristics which differ from those of the respective individual oxides. The acidity of silica is less than that of the silica titania mixture and titania alone may exhibit acidic and basic properties, although being predominantly acidic. It is thought that alumina is slightly more acidic than silica. The acid-base properties on solid surfaces may change depending on preparation method and pre-treatment, but are controlled mainly by the electro-negativity of the metal ions of the solid. Thus, acid-base properties of (OH) hydroxyl groups are in large part controlled

by the electro-negativity of surface metal ions (M) such as Al, Si and Ti. Thus, the hydroxyl group may release a proton ($H^+$) as:

$$M\text{-}O\text{-}H > M\text{-}O^- + H^+$$

Correspondingly, the basic property may be seen at some sites where the electro-negativity of M is low:

$$M\text{-}O\text{-}H > M^+ + OH^-$$

The dissociation, although strongly influenced by the metal (M), is also influenced by the acid-base strength of the reactant and somewhat by the overall composition of the fluid in which the reaction occurs.

In the case of cracking of diesel condensable hydrocarbons, a method which utilizes crystalline aluminosilicates (zeolites) is preferred. Acidic sites on silicates are formed in the presence of water and thus SiOH is formed where the positively-charged portion is H and the negatively-charged portion is SiO. The hydrogen cation may be present in a cationic complex such as $M^{n+}(OH_2)_x$, forming acid sites on aluminosilicates, such as where $M^{n+}$ is $La^{+3}$ (lanthanum), $Ce^{+3}$ (cerium) and $Ca^{+2}$ (calcium).

When all four oxygen atoms of an $SiO_4$ tetrahedron in a solid acid material are shared by two tetrahedra, a three-dimensional silicon-oxygen framework is formed. In modifications of the structures as in zeolites, some of the tetrahedral $Si^{+4}$ ions are substituted by $Al^{+3}$ ions so that the other positive ions must be present to neutralize the negative charge of the framework.

The substitution of $Si^{+4}O_4$ tetrahedra by $Al^{+3}O_4$ tetrahedra is an important factor which contributes to the catalytic properties of aluminosilicates because the substitution generates acid centres at their surfaces. This can be illustrated by the following aluminosilicates lattice:

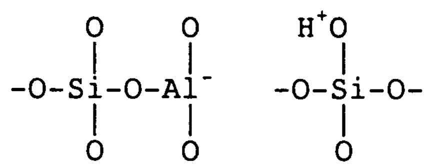

A centre containing a loosely or releasably-bonded hydrogen proton is thus formed, playing the role of a Bronsted acid centre. Thus, acid sites on the surface of binary or mixed oxides may differ from those of the single oxides.

The invention, utilizing solid acid materials, provides an effective, continuous method for reducing the amount of condensable hydrocarbons (soluble organic fraction) of particulate material in diesel engine exhaust gases. The method of the invention was found to be economical because it did not depend on costly precious metal catalysts to crack condensable hydrocarbons. The method is advantageously used to achieve the desired cracking of condensable hydrocarbons while minimizing sulphur oxidation in diesel exhaust. The method and solid acid catalysts are able to be utilized to effectively treat diesel exhaust particulate material at the prevailing temperature of diesel exhaust.

While the invention has been described primarily in terms of specific examples thereof, the scope of the present invention is not intended to be limited thereto but rather only to the extent set forth hereafter in the scope of the claims that follow.

## Claims

1. A method for treating internal combustion engine exhaust containing unburned hydrocarbons therein, which method comprises contacting the exhaust with a catalytic material which causes cracking of said unburned hydrocarbons, characterised in that the internal combustion engine exhaust is produced by a diesel-fuelled engine and comprises particles having cores of carbonaceous material and condensable hydrocarbons deposited on the carbonaceous material, the catalytic material comprises solid acid material having hydrogen cations releasably retained at acidic sites thereof, and at least a portion of the condensable hydrocarbons is cracked to reduce the mass of the exhaust particles.

2. A method according to claim 1, in which the solid acid material is supported on a monolithic support body formed from either a ceramic material or a metal.

3. A method according to claim 1 or 2, in which the catalytic solid acid material is selected from a group containing amorphous aluminosilicates, crystalline aluminosilicates, and mixed oxides containing silica.

4. A method according to claim 3, in which the catalytic solid acid material is a mixed oxide containing silica selected from chemically-mixed binary oxides formed by co-precipitation of silica with either titania, magnesia, lanthana or ceria.

5. A method according to claim 1 or 2, in which the catalytic solid acid material is a catalytic Y-type zeolite having releasable hydrogen cations at exchangeable cationic sites, the cationic sites consisting essentially of at least one of hydrogen cations and multi-valent hydrolyzed cations, and the cracking of said portion of the condensable hydrocarbons occurs when the condensable hydrocarbons are in contact with the cationic sites, as the hydrogen cations are released from the sites.

6. A method according to claim 5, in which the multi-valent hydrolyzed cations are selected from hydrolyzed cerium, hydrolyzed lanthanum and hydrolyzed calcium.

7. A method according to claim 5, in which the catalytic solid acid material is initially formed as a suspension of the zeolite and finely-divided particles of a washcoat precursor, and the suspension is applied as a layer onto a monolithic support body.

8. A method according to claim 1 or 2, in which said portion of condensable hydrocarbons in the exhaust is contacted with a catalyst consisting essentially of the solid acid material in the form of a catalytic HY-type zeolite having hydrogen cations at exchangeable cationic sites, the hydrogen cations being releasably retained at the sites, and a catalytic metal selected from a group containing platinum, palladium, ruthenium, rhodium and iridium; said portion of the condensable hydrocarbons is cracked whilst being in contact with the cationic sites as the hydrogen cations are released from the sites, and the cracked hydrocarbons thus formed are oxidised in the presence of the catalytic metal.

9. A method according to claim 8, in which the catalyst is initially formed as a suspension of the catalyst and finely-divided particles of a washcoat precursor, and the suspension is applied as a layer onto a monolithic support body.

10. A catalyst for the treatment of diesel-fuelled engine exhaust by a method according to claim 1, which catalyst comprises a support body carrying a catalytically-active solid acid material having hydrogen cations releasably retained at acidic sites thereof, the solid acid material being selected from a group containing amorphous aluminosilicates, crystalline aluminosilicates, and mixed oxides containing silica.

11. A catalyst according to claim 10, in which the catalyst comprises a monolithic-type support body carrying a catalytically-active Y-type zeolite having hydrogen cations at exchangeable cationic sites, the hydrogen cations being releasably retained at the sites.

12. A catalyst according to claim 11, in which the cationic sites consist essentially of multi-valent hydrolyzed cations selected from a group containing hydrolyzed cerium, hydrolyzed lanthanum and hydrolyzed calcium.

13. A catalyst according to claim 10, in which the catalyst comprises a monolithic-type support body carrying a catalyst consisting essentially of catalytically-active HY-type zeolite having hydrogen cations at exchangeable cationic sites, the hydrogen cations being releasably retained at the sites, and a catalytic metal selected from a group containing platinum, palladium, ruthenium, rhodium and iridium.

European Patent Office

# EUROPEAN SEARCH REPORT

Application Number

EP 92 20 0749

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 061 008 (MITSUBISHI DENKI KK)<br>* page 4, line 16 - page 5, line 3 *<br>* page 9, line 21 - line 24 *<br>--- | 1-3,5,8, 10,11,13 | B01D53/36<br>B01J29/08 |
| Y,D | US-A-3 476 508 (KEARBY ET AL.)<br>* column 2, line 39 - line 44 *<br>* column 2, line 55 - line 60 *<br>* column 3, line 3 - line 34 *<br>--- | 1-13 | |
| Y | EP-A-0 382 434 (NIPPON SHOKUBAI KAGAKU KOGYO)<br>* page 1, line 39 - line 42 *<br>* page 2, line 49 - page 3, line 14; example 1 *<br>--- | 1-13 | |
| P,A | EP-A-0 449 423 (NIPPON SHOKUBAI KAGAKU KOGYO)<br>* claims 1-12 *<br>--- | 1-4,7-13 | |
| A | GB-A-2 176 128 (INSTITUT FRANCAIS DU PETROLE)<br>* page 2, line 8 - line 9 *<br>* page 2, line 38 - line 39 *<br>* page 4, line 9 - line 16 *<br>----- | 1,3-6,8, 10-13 | TECHNICAL FIELDS SEARCHED (Int. Cl.5 )<br>B01D<br>B01J |

The present search report has been drawn up for all claims

| Place of search | Date of completion of the search | Examiner |
|---|---|---|
| THE HAGUE | 10 JULY 1992 | EIJKENBOOM T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document